# EUROPEAN PATENT APPLICATION

(11) **EP 4 726 815 A1**
(43) Date of publication of application: **15.04.2026**
(21) Application number: 23942185.2
(22) Date of filing: 14.12.2023
(51) Int. Cl.: H01M 6/00, H01M 10/058

(54) **LOCATING APPARATUS, BATTERY CELL MANUFACTURING DEVICE AND INSULATING MEMBER LOCATION METHOD**

(30) Priority: 19.06.2023 CN 202310729203
(71) Applicant: Contemporary Amperex Technology Co., Limited, Ningde, Fujian 352100 (CN)
(72) Inventor: ZHENG, Zhijian, Ningde, Fujian 352100 (CN); FAN, Xiang, Ningde, Fujian 352100 (CN); NIE, Wenqing, Ningde, Fujian 352100 (CN); HONG, Chang, Ningde, Fujian 352100 (CN)
(74) Representative: Kraus & Lederer PartGmbB
(86) International application number: PCT/CN2023/138844
(87) International publication number: WO 2024/259919

(57) **Abstract**

A positioning apparatus, a battery cell manufacturing device, and an insulator positioning method. The positioning apparatus includes a positioning platform and a positioning mechanism, where the positioning platform is configured to support the insulator, and the positioning mechanism is configured to abut against at least one edge of the insulator to position the insulator. The insulator is positioned by abutting the positioning mechanism against at least one edge of the insulator, improving the positioning accuracy. This improves the relative positional relationship between the insulator and other components in cooperation when the insulator is transferred to a next station, helping improve the quality of connection between the other components and the insulator.

## Description

### CROSS-REFERENCE TO RELATED APPLICATIONS

This application claims priority to Chinese Patent Application No. 202310729203.3, filed on June 19, 2023 and entitled "POSITIONING APPARATUS, BATTERY CELL MANUFACTURING DEVICE, AND INSULATOR POSITIONING METHOD", which is incorporated herein by reference in its entirety.

### TECHNICAL FIELD

This application relates to the field of battery technology, and in particular, to a positioning apparatus, a battery cell manufacturing device, and an insulator positioning method.

### BACKGROUND

During battery cell manufacturing, the low positioning accuracy of components of a battery cell leads to unsatisfying quality of connection between the components of the battery, thereby reducing the quality of the battery cell.

### SUMMARY

Embodiments of this application provide a positioning apparatus, a battery cell manufacturing device, and an insulator positioning method, so as to improve the positioning accuracy of components during battery cell manufacturing.

According to a first aspect, an embodiment of this application provides a positioning apparatus for positioning an insulator, where the insulator is configured to wrap an outer surface of a workpiece, and the positioning apparatus includes a positioning platform and a positioning mechanism. The positioning platform is configured to support the insulator, and the positioning mechanism is configured to abut against at least one edge of the insulator to position the insulator.

In this technical solution, the insulator is positioned by abutting the positioning mechanism against at least one edge of the insulator, improving the positioning accuracy. This improves the relative positional relationship between the insulator and other components in cooperation when the insulator is transferred to a next station, helping improve the quality of connection between the other components and the insulator.

In some embodiments according to the first aspect of this application, the positioning mechanism is configured to abut against two opposite edges of the insulator to position the insulator.

In this technical solution, the positioning mechanism abuts against two opposite edges of the insulator to position the insulator, improving the positioning accuracy. This improves the relative positional relationship between the insulator and other components in cooperation when the insulator is transferred to a next station, helping improve the quality of connection between the other components and the insulator.

In some embodiments according to the first aspect of this application, the positioning mechanism includes a first abutting portion, a second abutting portion, and an adjustment assembly, where the first abutting portion and the second abutting portion are arranged opposite each other along a first direction, the first abutting portion and the second abutting portion are configured to abut against two opposite edges of the insulator respectively, the first abutting portion and the second abutting portion are connected to the adjustment assembly, and the adjustment assembly is configured to adjust the distance between the first abutting portion and the second abutting portion.

In this technical solution, the first abutting portion and the second abutting portion abut against two opposite edges of the insulator respectively, improving the positioning accuracy. The adjustment assembly can adjust the distance between the first abutting portion and the second abutting portion, enabling the positioning mechanism to position insulators of different sizes. Therefore, the application scope is increased.

In some embodiments according to the first aspect of this application, the adjustment assembly includes a first connecting seat, a second connecting seat, and a driver, where the first connecting seat connects the first abutting portion and the driver, the second connecting seat connects the second abutting portion and the driver, and the driver is configured to drive at least one of the first connecting seat and the second connecting seat to move along the first direction to adjust the distance between the first abutting portion and the second abutting portion.

In this technical solution, the first connecting seat and the second connecting seat are disposed to transmit the driving force from the driver to the first abutting portion and the second abutting portion, so as to adjust the distance between the first abutting portion and the second abutting portion.

In some embodiments according to the first aspect of this application, the driver has a first output end and a second output end arranged opposite each other, where the first connecting seat is connected to the first output end, the second connecting seat is connected to the second output end, and the driver is configured to drive the first connecting seat and the second connecting seat to move in opposite directions.

In this technical solution, the driver drives the first connecting seat and the second connecting seat to move in opposite directions, which can improve the efficiency of adjusting the distance between the first abutting portion and the second abutting portion.

In some embodiments according to the first aspect of this application, the driver is a double-acting cylinder.

In this technical solution, with two output ends, the double-acting cylinder can synchronously drive the first connecting seat and the second connecting seat, providing high driving efficiency.

In some embodiments according to the first aspect of this application, the positioning platform has a support surface, and the support surface is configured to support the insulator; where the first connecting seat and the second connecting seat are both located on a side of the positioning platform facing away from the support surface.

In this technical solution, the first connecting seat and the second connecting seat are both located on the side of the positioning platform facing away from the support surface, reducing the risk of interference between the adjustment assembly and the insulator and helping improve the positioning accuracy.

In some embodiments according to the first aspect of this application, the first abutting portion is disposed adjustably along the first direction on the first connecting seat; and/or the second abutting portion is disposed adjustably along the first direction on the second connecting seat.

In this technical solution, the first abutting portion is disposed adjustably along the first direction on the first connecting seat; and/or the second abutting portion is disposed adjustably along the first direction on the second connecting seat. This can increase the specific adjustment range of distance between the first abutting portion and the second abutting portion, enabling the positioning mechanism to position insulators of more sizes, thereby enhancing the versatility of the positioning apparatus.

In some embodiments according to the first aspect of this application, the first abutting portion is provided with a first clearance notch for avoiding a clamping mechanism; and/or the second abutting portion is provided with a second clearance notch for avoiding the clamping mechanism, where the clamping mechanism is configured to clamp the insulator positioned on the positioning platform.

In this technical solution, the first clearance notch and the second clearance notch help the clamping mechanism clamp the insulator positioned by the positioning apparatus.

In some embodiments according to the first aspect of this application, the first abutting portion is provided with a plurality of first clearance notches arranged at intervals; and/or the second abutting portion is provided with a plurality of second clearance notches arranged at intervals.

In this technical solution, a plurality of first clearance notches and/or a plurality of second clearance notches allows a plurality of clamping mechanisms to jointly clamp the insulator, which can improve clamping stability.

In some embodiments according to the first aspect of this application, along the first direction, a surface of the first abutting portion facing the second abutting portion is provided with a first restraint member, and the first restraint member is configured to restrict the edge of the insulator against the first abutting portion from moving in a direction away from the positioning platform; and/or along the first direction, a surface of the second abutting portion facing the first abutting portion is provided with a second restraint member, and the second restraint member is configured to restrict the edge of the insulator against the second abutting portion from moving in a direction away from the positioning platform.

In this technical solution, the first restraint member and/or the second restraint member restrict the position of the insulator, so that the insulator is less likely to detach from the first abutting portion and the second abutting portion, thereby improving positioning stability.

In some embodiments according to the first aspect of this application, the positioning apparatus further includes a rotating seat and a centering mechanism, where the positioning platform and the positioning mechanism are connected to the rotating seat, the rotating seat is connected to the centering mechanism, and the centering mechanism is configured to drive the rotating seat to rotate.

In this technical solution, the centering mechanism drives the rotating seat to rotate, thereby driving the positioning platform and the positioning mechanism to rotate. This can adjust the positions of the positioning platform and the positioning mechanism relative to another structure, helping improve the accuracy of cooperation between the insulator and another component.

In some embodiments according to the first aspect of this application, the rotation axis of the rotating seat is perpendicular to the support surface of the positioning platform, and the support surface is configured to support the insulator.

In this technical solution, the rotation axis of the rotating seat is perpendicular to the support surface of the positioning platform, allowing the centering mechanism to drive the rotating seat to rotate. This can effectively adjust the positions of the positioning platform and the positioning mechanism relative to another structure, helping improve the accuracy of cooperation between the insulator and another component.

In some embodiments according to the first aspect of this application, the positioning apparatus further includes a positioning pin, the positioning pin is disposed on the positioning platform, and the positioning pin is configured to mesh with a positioning hole on the insulator.

In this technical solution, the positioning pin can mesh with the positioning hole on the insulator to position the insulator on the positioning platform, improving the accuracy of placing the insulator on the positioning platform. In cooperation with the positioning mechanism, the positioning pin can further improve the positioning accuracy of the insulator. This improves the relative positional relationship between the insulator and other components in cooperation when the insulator is transferred to a next station, helping improve the quality of connection between the other components and the insulator.

According to a second aspect, an embodiment of this application provides a battery cell manufacturing device, including a clamping mechanism and the positioning apparatus according to any one of the preceding embodiments. The clamping mechanism is disposed downstream of the positioning apparatus, and the clamping mechanism is configured to clamp the insulator positioned by the positioning apparatus.

In this technical solution, the positioning apparatus positions the insulator by abutting against at least one edge of the insulator, improving the positioning accuracy. This improves the relative positional relationship between the insulator and other components in cooperation when the clamping mechanism clamps the insulator and transfers it to next stations, helping improve the quality of connection between the other components and the insulator.

According to a third aspect, an embodiment of this application provides an insulator positioning method, and the insulator positioning method includes:
placing an insulator on a positioning platform; and
abutting a positioning mechanism against at least one edge of the insulator to position the insulator.

In this technical solution, the positioning mechanism abuts against at least one edge of the insulator to position the insulator, improving the positioning accuracy. This improves the relative positional relationship between the insulator and other components in cooperation when the insulator is transferred to a next station, helping improve the quality of connection between the other components and the insulator.

In some embodiments according to the third aspect of this application, before the placing an insulator on a positioning platform, the insulator positioning method further includes: rotating the positioning platform and the positioning mechanism through a centering mechanism to adjust positions of the positioning platform and the positioning mechanism relative to a feeding apparatus, where the feeding apparatus is configured to provide the insulator.

In this technical solution, before the insulator is placed on the positioning platform, the positioning platform and the positioning mechanism are rotated through the centering mechanism to adjust the positions of the positioning platform and the positioning mechanism relative to the feeding apparatus, allowing the feeding apparatus to place the insulator on the positioning platform more accurately.

In some embodiments according to the third aspect of this application, the placing an insulator on a positioning platform includes: placing, through a transfer mechanism, the insulator provided by a feeding apparatus on the positioning platform.

In this technical solution, the insulator provided by the feeding apparatus is placed on the positioning platform by using the transfer mechanism, which can reduce labor costs and improve the production efficiency.

In some embodiments according to the third aspect of this application, after the abutting a positioning mechanism against at least one edge of the insulator, the insulator positioning method further includes: rotating the positioning platform and the positioning mechanism through a centering mechanism to adjust positions of the positioning platform and the positioning mechanism relative to an assembly apparatus, where the assembly apparatus is configured to assemble the insulator on a workpiece.

In this technical solution, after the positioning mechanism is configured to abut against at least one edge of the insulator, the positioning platform and the positioning mechanism are rotated through the centering mechanism to adjust the positions of the positioning platform and the positioning mechanism relative to the assembly apparatus. This improves the relative positional relationship between the insulator and other components in cooperation when the insulator is transferred to a next station, helping improve the quality of connection between the other components and the insulator.

In some embodiments according to the third aspect, after the abutting a positioning mechanism against at least one edge of the insulator, the insulator positioning method further includes: transferring, through a clamping mechanism, the insulator on the positioning platform to an assembly apparatus, where the assembly apparatus is configured to assemble the insulator on a workpiece.

In this technical solution, the clamping mechanism is used to transfer the insulator on the positioning platform to the assembly apparatus, which can reduce labor costs and improve the production efficiency.

### BRIEF DESCRIPTION OF DRAWINGS

To describe the technical solutions in the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is an isometric view of a positioning apparatus according to some embodiments of this application;
FIG. 2 is a schematic structural diagram of a positioning apparatus according to some embodiments of this application;
FIG. 3 is a schematic structural diagram of a positioning apparatus (without showing the positioning platform) according to some embodiments of this application from one angle of view;
FIG. 4 is a schematic structural diagram of a positioning apparatus (without showing the positioning platform) according to some embodiments of this application from another angle of view;
FIG. 5 is a schematic structural diagram of a positioning apparatus (without showing the positioning platform) according to some embodiments of this application from yet another angle of view;
FIG. 6 is a schematic diagram of an insulator placed on a positioning platform of a positioning apparatus;
FIG. 7 is an enlarged view of position A1 in FIG. 2;
FIG. 8 is an enlarged view of position B1 in FIG. 2;
FIG. 9 is an enlarged view of position A2 in FIG. 4;
FIG. 10 is an enlarged view of position B2 in FIG. 4;
FIG. 11 is a schematic structural diagram of a positioning apparatus (without showing the positioning platform) according to some embodiments of this application from yet another angle of view;
FIG. 12 is a schematic structural diagram of a positioning apparatus according to some other embodiments of this application;
FIG. 13 is a schematic structural diagram of a positioning apparatus according to some other embodiments of this application; and
FIG. 14 is a flowchart of an insulator positioning method according to some embodiments of this application.

Reference signs: 100: positioning apparatus; 10: positioning platform; 11: support surface; 20: positioning mechanism; 21: first abutting portion; 211: first abutting surface; 212: first clearance notch; 22: second abutting portion; 221: second abutting surface; 222: second clearance notch; 23: adjustment assembly; 231: first connecting seat; 2311: first slide groove; 232: second connecting seat; 2321: second slide groove; 233: driver; 234: first slide block; 235: second slide block; 236: first restraint member; 2361: first restraint surface; 237: second restraint member; 2371: second restraint surface; 30: rotating seat; 40: centering mechanism; 50: supporting piece; 60: base; 70: positioning pin; 200: insulator; 210: first edge; 220: second edge; X: direction perpendicular to the support surface; Y: first direction; and Z: second direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. Generally, the components of the embodiments of this application described and shown in the accompanying drawings herein can be arranged and designed in various configurations.

Therefore, the detailed description of the examples of this application is not intended to limit the protection scope of this application, but rather, to merely represent the selected examples of this application. All other embodiments obtained by a person of ordinary skill in the art based on the embodiments of this application without creative efforts shall fall within the protection scope of this application.

It should be noted that, in absence of conflict, the embodiments and features in the embodiments in this application may be combined with each other.

It should be noted that similar reference signs and letters indicate similar items in the following drawings, and therefore once an item is defined in one drawing, it does not need to be further defined and explained in the subsequent drawings.

In the description of the embodiments of this application, it should be noted that the indicated orientation or positional relationship is based on the orientation or positional relationship shown in the drawings, the orientation or positional relationship that the product of this application is usually placed in during use, or the orientation or positional relationship commonly understood by those skilled in the art. They are merely for ease and brevity of description of the embodiments of this disclosure rather than indicating or implying that the apparatuses or components mentioned must have specific orientations or must be constructed and operated according to specific orientations, and therefore should not be understood as a limitation on this application. In addition, the terms "first", "second", "third", and the like are merely intended for a purpose of description, and shall not be understood as an indication or implication of relative importance.

At present, from the perspective of market development, the application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent a liquid or another foreign matter from affecting charging or discharging of the battery cell.

The battery cell includes an end cover assembly, a housing, an electrode assembly, and an insulator, and the electrode assembly includes a positive electrode plate, a negative electrode plate, and a separator. The battery cell mainly works relying on migration of metal ions between the positive electrode plate and the negative electrode plate. The positive electrode plate includes a positive electrode current collector and a positive electrode active substance layer, where a surface of the positive electrode current collector is coated with the positive electrode active substance layer. A positive electrode current collector not coated with the positive electrode active substance layer protrudes from a positive electrode current collector already coated with the positive electrode active substance layer, and the positive electrode current collector not coated with the positive electrode active substance layer serves as a positive electrode tab. Taking a lithium-ion battery as an example, the positive electrode current collector may be made of aluminum and a positive electrode active substance may be lithium cobaltate, lithium iron phosphate, ternary lithium, lithium manganate, or the like. The negative electrode plate includes a negative electrode current collector and a negative electrode active substance layer, where a surface of the negative electrode current collector is coated with the negative electrode active substance layer. A negative electrode current collector not coated with the negative electrode active substance layer protrudes from a negative electrode current collector coated with the negative electrode active substance layer, and the negative electrode current collector not coated with the negative electrode active substance layer serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together. A material of the separator may be PP (polypropylene, polypropylene), PE (polyethylene, polyethylene), or the like. In addition, the electrode assembly may be a wound structure or a laminated structure, but the embodiments of this application are not limited thereto.

The housing has an opening, the end cover assembly is configured to cover the opening of the housing, and the housing and the end cover assembly together form an accommodation space for accommodating the electrode assembly and the insulator. The insulator wraps around the outer periphery of the electrode assembly and is connected to the end cover assembly, and the insulator can insulate the electrode assembly from the housing. The end cover assembly and the insulator may be connected by welding, bonding, or the like. The insulator needs to be positioned before being connected to the end cover assembly to ensure a relatively accurate positional relationship between the insulator and the end cover assembly. For example, the distance between an edge of the insulator and an edge of the end cover assembly needs to be controlled within a predetermined range to ensure a good positional relationship between the insulator and the end cover assembly for convenience of connection, thereby forming a high-quality connection. However, in related technologies, the battery cell manufacturing device positions the insulator by meshing a positioning pin with a positioning hole on the insulator. After the positioning pin is inserted into the positioning hole, due to the clearance fitting between the positioning hole and the positioning pin, the insulator can shift in any radial direction of the positioning hole, reducing the positioning accuracy of the insulator. In this case, a relative positional relationship between the insulator and the end cover assembly cannot be achieved reasonably, thereby reducing the quality of connection between the insulator and the end cover assembly.

**In** view of this, to alleviate the problem of low quality of connection between the insulator and the end cover assembly due to low insulator positioning accuracy of the battery cell manufacturing device, an embodiment of this application provides a positioning apparatus. The positioning apparatus includes a positioning platform and a positioning mechanism, where the positioning platform is configured to support the insulator, and the positioning mechanism is configured to abut against at least one edge of the insulator to position the insulator.

The insulator is positioned by abutting the positioning mechanism against at least one edge of the insulator, improving the positioning accuracy. This improves the relative positional relationship between the insulator and other components in cooperation when the insulator is transferred to a next station, helping improve the quality of connection between the other components and the insulator.

The positioning apparatus disclosed in this embodiment of this application may be used for, but not limited to, positioning the insulator, and may also be used in a battery cell manufacturing device for producing battery cells.

For ease of description, in the following embodiments, related structures are described using an example, in which the positioning mechanism is used for manufacturing battery cells.

An embodiment of this application provides a battery cell manufacturing device. The battery cell manufacturing device includes a positioning apparatus and a clamping mechanism (not shown in the figures). The clamping mechanism is disposed downstream of the positioning apparatus, and the clamping mechanism is configured to clamp the insulator positioned by the positioning apparatus.

It should be noted that the term "downstream" mentioned in the embodiments of this application refers to a subsequent step in the sequence of production and does not limit the spatial positions of components. It can be understood that if the clamping mechanism is disposed downstream of the positioning apparatus, the insulator is positioned by the positioning apparatus and then clamped by the clamping mechanism to the next station.

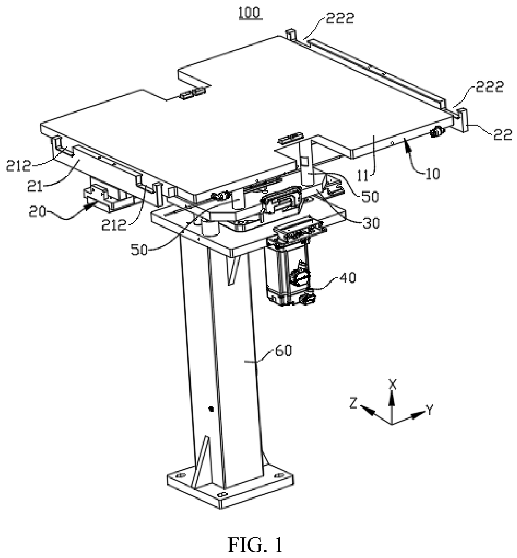

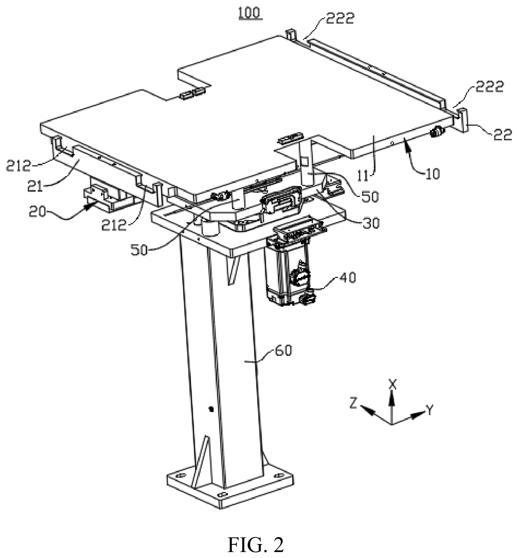

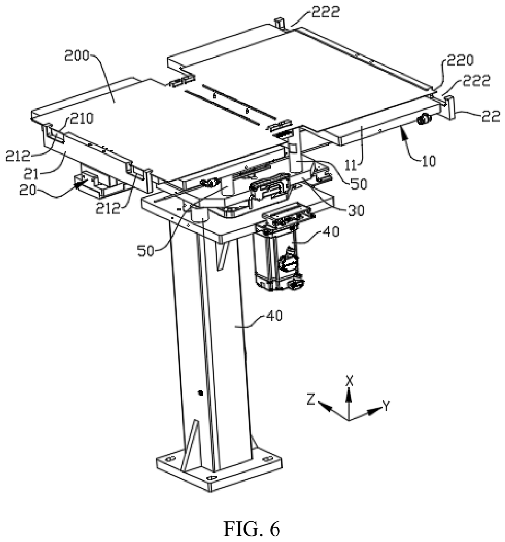

As shown in FIG. 1 and FIG. 2, in some embodiments, a positioning apparatus 100 is configured to position an insulator 200 (shown in FIG. 6), where the insulator 200 is configured to wrap the outer surface of a workpiece. The positioning apparatus 100 includes a positioning platform 10 and a positioning mechanism 20, where the positioning platform 10 is configured to support the insulator 200, and the positioning mechanism 20 is configured to abut against at least one edge of the insulator 200 to position the insulator 200.

The workpiece may vary depending on the application scenario of the positioning apparatus 100. For example, the workpiece may be an electrode assembly, the insulator 200 wraps around the outer surface of the electrode assembly to insulate the electrode assembly from the housing, and the insulator 200 is connected to an end cover assembly. For another example, the workpiece may be a housing, and the insulator 200 wraps around the outer surface of the housing. When the positioning apparatus 100 is used for battery manufacturing, the workpiece may further be a battery box, and the insulator 200 wraps around the outer surface of the box.

That the positioning platform 10 is configured to support the insulator 200 may mean that the positioning platform 10 bears part or all of the weight of the insulator. The positioning platform 10 has a support surface 11, and the support surface 11 is configured to bear the insulator 200, so that the positioning platform 10 supports the insulator 200.

The positioning mechanism 20 is configured to abut against at least one edge of the insulator 200, thereby positioning the edges of the insulator 200. When the insulator 200 positioned by the positioning apparatus 100 is clamped by the clamping mechanism to a next station, the insulator 200 can better cooperate with other components at the next station. For example, the insulator 200 wraps around the outer surface of the electrode assembly. After the insulator 200 positioned by the positioning apparatus 100 is transferred by the clamping mechanism to a next station, the insulator 200 wraps around the outer surface of the electrode assembly at the next station and is connected to the end cover assembly. Therefore, when the positioning mechanism 20 abuts against at least one edge of the insulator 200, a reasonable positional relationship can be achieved between the insulator 200 and the end cover assembly after the insulator 200 is transferred to the next station, facilitating the connection between the end cover assembly and the insulator 200, thereby helping improve the quality of connection between the end cover assembly and the insulator 200.

The insulator 200 is positioned by abutting the positioning mechanism 20 against at least one edge of the insulator 200, improving the positioning accuracy. This improves the relative positional relationship between the insulator 200 and other components in cooperation when the insulator 200 is transferred to a next station, helping improve the quality of connection between the other components and the insulator 200.

The positioning mechanism 20 may abut against one edge of the insulator 200 to position the insulator 200. In other embodiments, the positioning mechanism 20 may alternatively abut against a plurality of edges of the insulator 200 to position the insulator 200, so that the plurality of edges of the insulator 200 provide high positioning accuracy. This improves the relative positional relationship between the insulator 200 and other components in cooperation when the insulator 200 is transferred to a next station, helping improve the quality of connection between the other components and the insulator 200. A plurality of means two or more.

In some embodiments, the positioning mechanism 20 is configured to abut against two opposite edges of the insulator 200 to position the insulator 200.

The positioning mechanism 20 abuts against two opposite edges of the insulator 200 to position the insulator 200, improving the positioning accuracy. This improves the relative positional relationship between the insulator 200 and other components in cooperation when the insulator 200 is transferred to a next station, helping improve the quality of connection between the other components and the insulator 200.

As shown in FIG. 2, FIG. 3, and FIG. 4, in some embodiments, the positioning mechanism 20 includes a first abutting portion 21, a second abutting portion 22, and an adjustment assembly 23, where the first abutting portion 21 and the second abutting portion 22 are arranged opposite each other along a first direction Y, the first abutting portion 21 and the second abutting portion 22 are configured to abut against two opposite edges of the insulator 200 respectively, the first abutting portion 21 and the second abutting portion 22 are connected to the adjustment assembly 23, and the adjustment assembly 23 is configured to adjust the distance between the first abutting portion 21 and the second abutting portion 22.

The adjustment assembly 23 is configured to adjust the distance between the first abutting portion 21 and the second abutting portion 22 along the first direction Y. As shown in FIG. 2, in some embodiments, the first abutting portion 21 and the second abutting portion 22 are located on opposite sides of the positioning platform 10 respectively along the first direction Y, and when viewed along a direction X perpendicular to the support surface, the first abutting portion 21 and the second abutting portion 22 do not overlap. In other embodiments, when viewed along the direction X perpendicular to the support surface, the first abutting portion 21 may overlap with the positioning platform 10, and the second abutting portion 22 may overlap with the positioning platform 10.

The adjustment assembly 23 may adjust the distance between the first abutting portion 21 and the second abutting portion 22 along the first direction Y by driving one of the first abutting portion 21 and the second abutting portion 22 to move towards or away from the other along the first direction Y. The adjustment assembly 23 may alternatively drive both the first abutting portion 21 and the second abutting portion 22 to move towards or away from each other along the first direction Y, thereby adjusting the distance between the first abutting portion 21 and the second abutting portion 22.

In the embodiment where the adjustment assembly 23 drives both the first abutting portion 21 and the second abutting portion 22 to move towards or away from each other along the first direction Y, one adjustment assembly 23 may be used to synchronously drive the first abutting portion 21 and the second abutting portion 22 to move towards or away from each other. This can simplify the structure of the positioning mechanism 20 and reduce manufacturing costs. Alternatively, two adjustment assemblies 23 may be used to drive the first abutting portion 21 and the second abutting portion 22 respectively to move along the first direction Y, so that the first abutting portion 21 and the second abutting portion 22 move towards or away from each other. In this way, the movement of the first abutting portion 21 and the second abutting portion 22 can be controlled separately, achieving more flexible positioning by the positioning mechanism 20.

The first abutting portion 21 has a first abutting surface 211 facing the second abutting portion 22, and the second abutting portion 22 has a second abutting surface 221 facing the first abutting portion 21. The two edges of the insulator 200 along the first direction Y are defined as a first edge 210 (shown in FIG. 6) and a second edge 220 (shown in FIG. 6). The first abutting surface 211 abuts against the first edge 210, and the second abutting surface 221 abuts against the second edge 220. When the first abutting surface 211 abuts against the first edge 210 and the first abutting surface 211 is parallel to the first edge 210, and the second abutting surface 221 abuts against the second edge 220 and the second abutting surface 221 is parallel to the second edge 220, it can be considered that the positioning mechanism 20 has positioned the insulator 200. In the embodiment where the first abutting portion 21 and the second abutting portion 22 are located on opposite sides of the positioning platform 10 respectively, when the first abutting portion 21 and the second abutting portion 22 abut against the two opposite edges of the insulator 200 respectively, the first abutting portion 21 may abut against an edge of the positioning platform 10, or the first abutting portion 21 may be distant from the edge of the positioning platform 10, and the second abutting portion 22 may abut against the edge of the positioning platform 10, or the second abutting portion 22 may be distant from the edge of the positioning platform 10.

It should be noted that positioning the insulator 200 by the positioning mechanism 20 may be: placing the insulator 200 between the first abutting portion 21 and the second abutting portion 22 after the distance between the first abutting portion 21 and the second abutting portion 22 is adjusted, adjusting until the first abutting surface 211 abuts against the first edge 210 and the first abutting surface 211 is parallel to the first edge 210, and adjusting until the second abutting surface 221 abuts against the second edge 220 and the second abutting surface 221 is parallel to the second edge 220.

Alternatively, positioning the insulator 200 by the positioning mechanism 20 may be: placing the insulator 200 to be positioned on the positioning platform 10, specifically, along the first direction Y, placing the insulator 200 between the first abutting portion 21 and the second abutting portion 22, and adjusting, by the adjustment assembly 23, the distance between the first abutting portion 21 and the second abutting portion 22, so that the distance between the first abutting portion 21 and the second abutting portion 22 gradually decreases. During the adjustment process, the first abutting surface 211 gradually approaches the first edge 210, and the second abutting surface 221 gradually approaches the second edge 220, until the first abutting surface 211 abuts against and is parallel to the first edge 210 and the second abutting surface 221 abuts against and is parallel to the second edge 220. During this process, the first abutting portion 21 and the second abutting portion 22 continuously adjust the position of the insulator 200 until the first abutting surface 211 abuts against and is parallel to the first edge 210 and the second abutting surface 221 abuts against and is parallel to the second edge 220, completing the positioning of the insulator 200.

The first abutting portion 21 and the second abutting portion 22 abut against two opposite edges of the insulator 200 respectively, improving the positioning accuracy. The adjustment assembly 23 can adjust the distance between the first abutting portion 21 and the second abutting portion 22, enabling the positioning mechanism 20 to position insulators 200 of different sizes. Therefore, the application scope is increased.

Referring to FIG. 2, FIG. 3, and FIG. 4, in some embodiments, the adjustment assembly 23 includes a first connecting seat 231, a second connecting seat 232, and a driver 233, where the first connecting seat 231 connects the first abutting portion 21 and the driver 233, the second connecting seat 232 connects the second abutting portion 22 and the driver 233, and the driver 233 is configured to drive at least one of the first connecting seat 231 and the second connecting seat 232 to move along the first direction Y to adjust the distance between the first abutting portion 21 and the second abutting portion 22.

The first abutting portion 21 and the driver 233 are indirectly connected through the first connecting seat 231, and the second abutting portion 22 and the driver 233 are indirectly connected through the second connecting seat 232. The adjustment assembly 23 may include one driver 233, and both the first connecting seat 231 and the second connecting seat 232 are connected to the driver 233. The driver 233 synchronously drives the first connecting seat 231 and the second connecting seat 232, simplifying the structure of the adjustment assembly 23, thereby simplifying the structure of the positioning mechanism 20 and reducing manufacturing costs. Alternatively, the adjustment assembly 23 may include two drivers 233, and the two drivers 233 are connected to the first connecting seat 231 and the second connecting seat 232 respectively. The two drivers 233 drive the first connecting seat 231 and the second connecting seat 232 respectively. In this way, the movement of the first connecting seat 231 and the second connecting seat 232 can be controlled separately, allowing the movement of the first abutting portion 21 and the second abutting portion 22 to be controlled separately, thereby achieving more flexible positioning by the positioning mechanism 20.

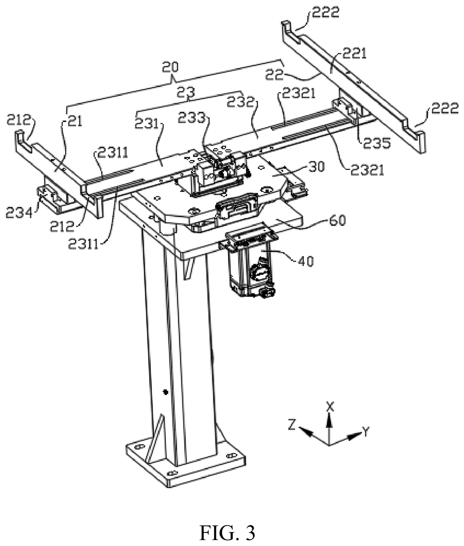

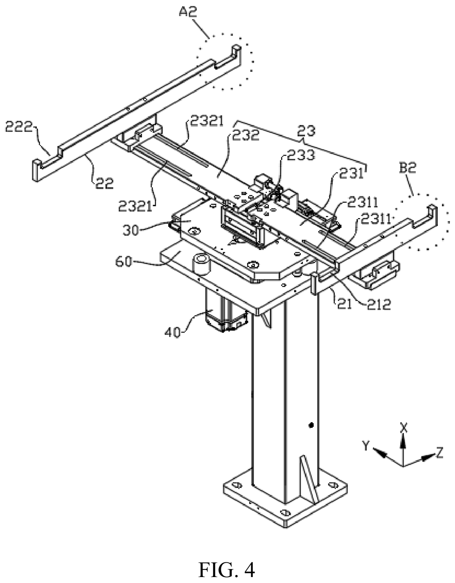

The first connecting seat 231 and the second connecting seat 232 may adopt various structures. As shown in FIG. 3 and FIG. 4, the first connecting seat 231 and the second connecting seat 232 are both rod-shaped structures extending along the first direction Y. In other embodiments, the first connecting seat 231 and the second connecting seat 232 may alternatively be L-shaped. The structures of the first connecting seat 231 and the second connecting seat 232 may be the same or different.

The first connecting seat 231 and the second connecting seat 232 are disposed to transmit the driving force from the driver 233 to the first abutting portion 21 and the second abutting portion 22, so as to adjust the distance between the first abutting portion 21 and the second abutting portion 22.

In other embodiments, the adjustment assembly 23 may not include the first connecting seat 231 and the second connecting seat 232, and both the first abutting portion 21 and the second abutting portion 22 are directly connected to the driver 233.

In some embodiments, the driver 233 has a first output end (not shown in the figures) and a second output end (not shown in the figures) arranged opposite each other, where the first connecting seat 231 is connected to the first output end, the second connecting seat 232 is connected to the second output end, and the driver 233 is configured to drive the first connecting seat 231 and the second connecting seat 232 to move in opposite directions.

The first connecting seat 231 and the second connecting seat 232 are connected to the first output end and the second output end of the driver 233 respectively, and the driver 233 can synchronously drive the first connecting seat 231 and the second connecting seat 232.

The first output end and the second output end can be arranged in various manners. For example, the first output end and the second output end are arranged opposite each other along the first direction Y, or the first output end and the second output end overlap in the first direction Y.

The driver 233 drives the first connecting seat 231 and the second connecting seat 232 to move in opposite directions, which can improve the efficiency of adjusting the distance between the first abutting portion 21 and the second abutting portion 22.

In some embodiments, the driver 233 is a double-acting cylinder.

The double-acting cylinder has two piston rods arranged opposite each other along the first direction Y, and the two piston rods serve as the first output end and the second output end of the driver 233 respectively.

With two output ends, the double-acting cylinder can synchronously drive the first connecting seat 231 and the second connecting seat 232, providing high driving efficiency.

In other embodiments, the driver 233 may alternatively be a single-acting cylinder, a screw motor, or the like.

As shown in FIG. 2, in some embodiments, the positioning platform 10 has a support surface 11, and the support surface 11 is configured to support the insulator 200; where the first connecting seat 231 and the second connecting seat 232 are both located on a side of the positioning platform 10 facing away from the support surface 11.

In a case that the distance between the first abutting portion 21 and the second abutting portion 22 is the smallest, when viewed along the direction X perpendicular to the support surface, the first connecting seat 231 overlaps with the positioning platform 10, and the second connecting seat overlaps with the positioning platform 10. In a case that the distance between the first abutting portion 21 and the second abutting portion 22 is the largest, when viewed along the direction X perpendicular to the support surface, the first connecting seat 231 may or may not overlap with the positioning platform 10, and the second connecting seat may or may not overlap with the positioning platform 10.

The first connecting seat 231 and the second connecting seat 232 are both located on the side of the positioning platform 10 facing away from the support surface 11, reducing the risk of interference between the adjustment assembly 23 and the insulator 200 and helping improve the positioning accuracy.

In some embodiments, the driver 233 is also located on the side of the positioning platform 10 facing away from the support surface 11. This facilitates driving of the first connecting seat 231 and the second connecting seat 232 and reduces the risk of interference with the insulator 200, helping improve the positioning accuracy.

As shown in FIG. 3 and FIG. 4, in some embodiments, the first abutting portion 21 is disposed adjustably along the first direction Y on the first connecting seat 231; and/or the second abutting portion 22 is disposed adjustably along the first direction Y on the second connecting seat 232.

The first abutting portion 21 can move along the first direction Y on the first connecting seat 231 to adjust the position of the first abutting portion 21 on the first connecting seat 231. The second abutting portion can move along the first direction Y on the second connecting seat 232 to adjust the position of the second abutting portion 22 on the second connecting seat 232.

The case may be that: only the first abutting portion 21 is disposed adjustably along the first direction Y on the first connecting seat 231; only the second abutting portion 22 is disposed adjustably along the first direction Y on the second connecting seat 232; or the first abutting portion 21 is disposed adjustably along the first direction Y on the first connecting seat 231, and the second abutting portion 22 is disposed adjustably along the first direction Y on the second connecting seat 232. FIG. 3 and FIG. 4 show that the first abutting portion 21 is disposed adjustably along the first direction Y on the first connecting seat 231, and the second abutting portion 22 is disposed adjustably along the first direction Y on the second connecting seat 232.

The first abutting portion 21 is disposed adjustably along the first direction Y on the first connecting seat 231; and/or the second abutting portion 22 is disposed adjustably along the first direction Y on the second connecting seat 232. This can increase the adjustment range of distance between the first abutting portion 21 and the second abutting portion 22, enabling the positioning mechanism 20 to position insulators 200 of more sizes, thereby enhancing the versatility of the positioning apparatus 100.

There are various ways to adjustably dispose the first abutting portion 21 along the first direction Y on the first connecting seat 231 and adjustably dispose the second abutting portion 22 along the first direction Y on the second connecting seat 232.

For example, as shown in FIG. 3 and FIG. 4, the first connecting seat 231 is provided with a first slide groove 2311, and along the direction X perpendicular to the support surface, the first slide groove 2311 runs through the first connecting seat 231. The second connecting seat 232 is provided with a second slide groove 2321, and along the direction X perpendicular to the support surface, the second slide groove 2321 traverses the second connecting seat 232. Both the first slide groove 2311 and the second slide groove 2321 extend along the first direction Y. The positioning mechanism 20 further includes a first slide block 234, a second slide block 235, a first locking member (not shown in the figures), and a second locking member (not shown in the figures).

The first abutting portion 21 is connected to the first slide block 234. The first abutting portion 21 may be detachably connected to the first slide block 234 by using bolts, screws, or the like. The first abutting portion 21 may alternatively be undetachably connected to the first slide block 234 by welding, bonding, or the like. The first locking member runs through the first slide groove 2311 and is connected to the first slide block 234. The first locking member is used to lock the first slide block 234 to the first connecting seat 231 or release the first slide block 234 from the first connecting seat 231. When the first locking member locks the first slide block 234 to the first connecting seat 231, the first slide block 234 is fixed relative to the first connecting seat 231. When the first locking member releases the first slide block 234 from the first connecting seat 231, the first slide block 234 can move relative to the first connecting seat 231 along the first direction Y, thereby adjusting the position of the first abutting portion 21 on the first connecting seat 231.

The second abutting portion 22 is connected to the second slide block 235. The second abutting portion 22 may be detachably connected to the second slide block 235 by using bolts, screws, or the like. The second abutting portion 22 may alternatively be undetachably connected to the second slide block 235 by welding, bonding, or the like. The second locking member runs through the second slide groove 2321 and is connected to the second slide block 235. The second locking member is used to lock the second slide block 235 to the second connecting seat 232 or release the second slide block 235 from the second connecting seat 232. When the second locking member locks the second slide block 235 to the second connecting seat 232, the second slide block 235 is fixed relative to the second connecting seat 232. When the second locking member releases the second slide block 235 from the second connecting seat 232, the second slide block 235 can move relative to the second connecting seat 232 along the first direction Y, thereby adjusting the position of the second abutting portion 22 on the second connecting seat 232.

There may be one or more first slide grooves 2311 and second slide grooves 2321. As shown in FIG. 3 and FIG. 4, two first slide grooves 2311 are provided and arranged at intervals along a second direction Z, and two second slide grooves 2321 are provided and arranged at intervals along the second direction Z. The first direction Y is perpendicular to the second direction Z, and the direction X perpendicular to the support surface, the first direction Y, and the second direction Z are perpendicular to each other.

In an embodiment where a plurality of first slide grooves 2311 are provided, the positioning mechanism 20 may include a plurality of first locking members, the first locking members and the first slide grooves 2311 are arranged on a one-to-one basis, and the first locking member runs through the corresponding first slide groove 2311 and is connected to the first slide block 234. In an embodiment where a plurality of second slide grooves 2321 are provided, the positioning mechanism 20 may include a plurality of second locking members, the second locking members and the second slide grooves 2321 are arranged on a one-to-one basis, and the second locking member runs through the corresponding second slide groove 2321 and is connected to the second slide block 235.

The first locking member may be a bolt, a screw, or the like. The second locking member may be a bolt, a screw, or the like. The first locking member and the first locking member may be the same or different.

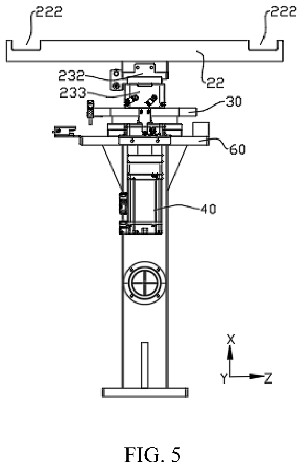

As shown in FIG. 3, FIG. 4, and FIG. 5, in some embodiments, the first abutting portion 21 is provided with a first clearance notch 212 for avoiding a clamping mechanism; and/or the second abutting portion 22 is provided with a second clearance notch 222 for avoiding the clamping mechanism, where the clamping mechanism is configured to clamp the insulator 200 positioned on the positioning platform 10.

When the first abutting portion 21 and the second abutting portion 22 abut against the two opposite edges of the insulator 200 respectively, the first clearance notch 212 and the second clearance notch 222 can expose part of the edge of the insulator 200. In this case, the clamping mechanism can clamp the exposed edge of the insulator 200 through the first clearance notch 212 and the second clearance notch 222 and transfer the insulator 200. As shown in FIG. 6, the insulator 200 is placed on the positioning platform 10, with part of one edge (the first edge 210) of the insulator 200 along the first direction Y exposed from the first clearance notch 212, and part of the other edge of the insulator 200 along the first direction Y exposed from the second clearance notch 222.

The case may be that: only the first abutting portion 21 is provided with the first clearance notch 212; only the second abutting portion 22 is provided with the second clearance notch 222; or the first abutting portion 21 is provided with the first clearance notch 212 and the second abutting portion 22 is provided with the second clearance notch 222. As shown in FIG. 3, FIG. 4, and FIG. 5, the first abutting portion 21 is provided with the first clearance notch 212, and the second abutting portion 22 is provided with the second clearance notch 222.

The first clearance notch 212 and the second clearance notch 222 help the clamping mechanism clamp the insulator 200 positioned by the positioning apparatus 100.

In some embodiments, one first clearance notch 212 may be provided, and one second clearance notch 222 may be provided.

In other embodiments, the first abutting portion 21 is provided with a plurality of the first clearance notches 212 arranged at intervals; and/or the second abutting portion 22 is provided with a plurality of the second clearance notches 222 arranged at intervals.

The case may be that only the first abutting portion 21 is provided with a plurality of the first clearance notches 212 and the plurality of first clearance notches 212 are arranged at intervals along the second direction Z.

The case may be that only the second abutting portion 22 is provided with a plurality of the second clearance notches 222 and the plurality of second clearance notches 222 are arranged at intervals along the second direction Z.

The case may be that the first abutting portion 21 is provided with a plurality of the first clearance notches 212 arranged at intervals, and the second abutting portion 22 is provided with a plurality of the second clearance notches 222 arranged at intervals. As shown in FIG. 3, FIG. 4, and FIG. 5, the first abutting portion 21 is provided with two first clearance notches 212 arranged at intervals along the second direction Z, and the second abutting portion 22 is provided with two second clearance notches 222 arranged at intervals along the second direction Z.

A plurality of first clearance notches 212 and/or a plurality of second clearance notches 222 allows a plurality of clamping mechanisms to jointly clamp the insulator 200, which can improve clamping stability.

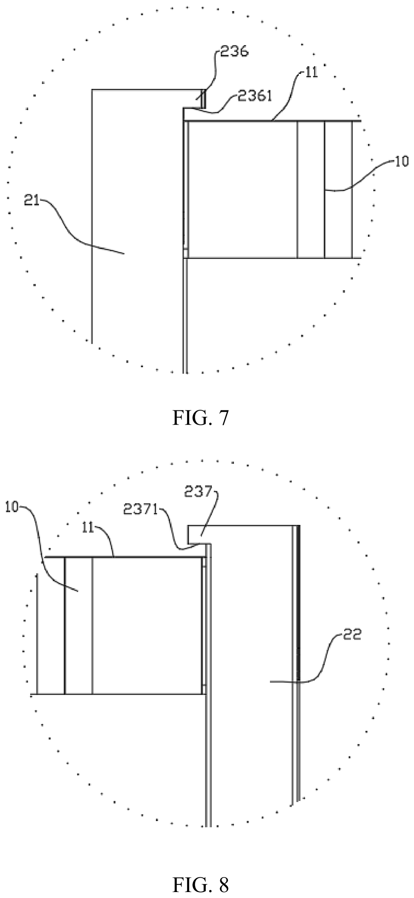

As shown in FIG. 7 to FIG. 10, in some embodiments, along the first direction Y, a surface of the first abutting portion 21 facing the second abutting portion 22 is provided with a first restraint member 236, and the first restraint member 236 is configured to restrict the edge of the insulator 200 against the first abutting portion 21 from moving in a direction away from the positioning platform 10; and/or along the first direction Y, a surface of the second abutting portion 22 facing the first abutting portion 21 is provided with a second restraint member 237, and the second restraint member 237 is configured to restrict the edge of the insulator 200 against the second abutting portion 22 from moving in a direction away from the positioning platform 10.

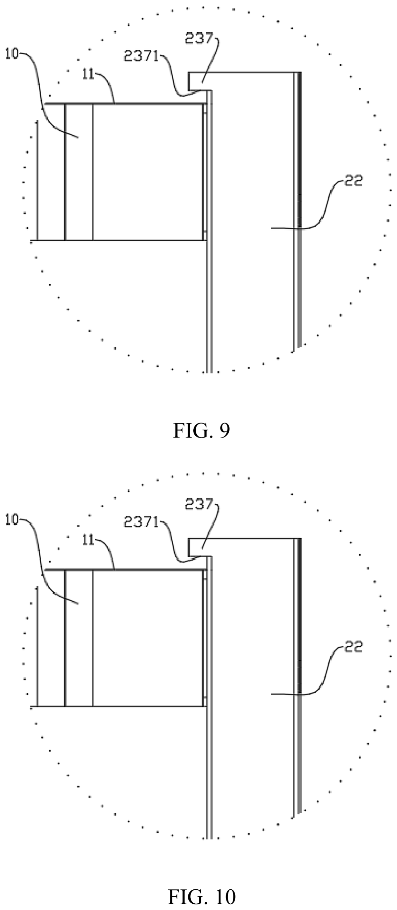

The surface of the first abutting portion 21 facing the second abutting portion 22 in the first direction Y is a first abutting surface 211. The first restraint member 236 protrudes from the first abutting surface 211 in a direction towards the second abutting portion 22. The first abutting portion 21 and the first restraint member 236 may form a T-shape or an L-shape. Along the direction X perpendicular to the support surface, the first restraint member 236 has a first restraint surface facing the support surface 11, and the first restraint surface is used to abut against the insulator 200 to restrict the insulator 200 from moving in a direction away from the positioning platform 10. As shown in FIG. 7 and FIG. 9, the first abutting portion 21 and the first restraint member 236 form an L-shaped structure.

There may be one or more first restraint members 236. In an embodiment where a plurality of first restraint members 236 are provided, the plurality of first restraint members 236 are arranged at intervals along the second direction Z. For example, in embodiments where the first abutting portion 21 is provided with the first clearance notch 212, if a first restraint member 236 is arranged on both sides of each first clearance notch 212 along the second direction Z, at least two first restraint members 236 may be disposed on the first abutting portion 21 provided with the first clearance notch 212.

The surface of the second abutting portion 22 facing the first abutting portion 21 in the first direction Y is a second abutting surface 221. The second restraint member 237 protrudes from the second abutting surface 221 in a direction towards the first abutting portion 21. The second abutting portion 22 and the second restraint member 237 may form a T-shape or an L-shape. Along the direction X perpendicular to the support surface, the second restraint member 237 has a second restraint surface 2371 facing the support surface 11, and the second restraint surface 2371 is used to abut against the insulator 200 to restrict the insulator 200 from moving in a direction away from the positioning platform 10. As shown in FIG. 8 and FIG. 10, the second abutting portion 22 and the second restraint member 237 form an L-shaped structure.

There may be one or more second restraint members 237. In an embodiment where a plurality of second restraint members 237 are provided, the plurality of second restraint members 237 are arranged at intervals along the second direction Z. For example, in embodiments where the second abutting portion 22 is provided with the second clearance notch 222, if a second restraint member 237 is arranged on both sides of each second clearance notch 222 along the second direction Z, at least two second restraint members 237 may be disposed on the second abutting portion 22 provided with the second clearance notch 222.

The case may be that: only the surface of the first abutting portion 21 facing the second abutting portion 22 is provided with the first restraint member 236; only the surface of the second abutting portion 22 facing the first abutting portion 21 is provided with the second restraint member 237; or the surface of the first abutting portion 21 facing the second abutting portion 22 is provided with the first restraint member 236, and the surface of the second abutting portion 22 facing the first abutting portion 21 is provided with the second restraint member 237. As shown in FIG. 2 and FIG. 4, the surface of the first abutting portion 21 facing the second abutting portion 22 is provided with the first restraint member 236, and the surface of the second abutting portion 22 facing the first abutting portion 21 is provided with the second restraint member 237.

The first restraint member 236 and/or the second restraint member 237 restrict the insulator 200, so that the insulator 200 is less likely to detach from the first abutting portion 21 and the second abutting portion 22, thereby improving positioning stability.

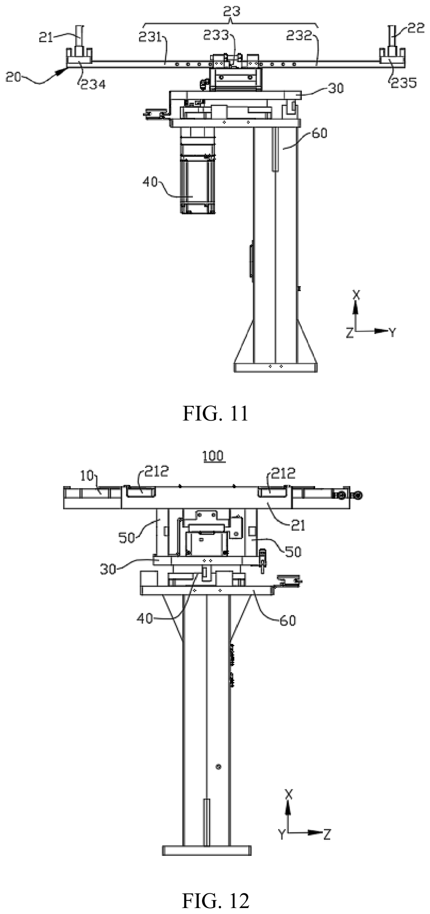

As shown in FIG. 11 and FIG. 12, in some embodiments, the positioning apparatus 100 further includes a rotating seat 30 and a centering mechanism 40, where the positioning platform 10 and the positioning mechanism 20 are connected to the rotating seat 30, the rotating seat 30 is connected to the centering mechanism 40, and the centering mechanism 40 is configured to drive the rotating seat 30 to rotate.

Both the positioning platform 10 and the positioning mechanism 20 are mounted on the rotating seat 30. The centering mechanism 40 may be a servo motor, a motor, or the like.

The centering mechanism 40 drives the rotating seat 30 to rotate, thereby driving the positioning platform 10 and the positioning mechanism 20 to rotate. This can effectively adjust the positions of the positioning platform 10 and the positioning mechanism 20 relative to other structures, helping improve the accuracy of cooperation between the insulator 200 and a workpiece.

In some embodiments, the rotation axis of the rotating seat 30 is perpendicular to the support surface 11 of the positioning platform 10, and the support surface 11 is configured to support the insulator 200.

It can be understood that an extending direction of the rotation axis of the rotating seat 30 is parallel to the direction perpendicular to the support surface 11.

The rotation axis of the rotating seat 30 is perpendicular to the support surface 11 of the positioning platform 10 and the centering mechanism drives the rotating seat 30 to rotate. This can effectively adjust the positions of the positioning platform 10 and the positioning mechanism 20 relative to another structure, helping improve the accuracy of cooperation between the insulator 200 and another component.

As shown in FIG. 12, in some embodiments, the positioning apparatus 100 further includes a supporting piece 50, and the supporting piece 50 is located on a side of the positioning platform 10 facing away from the support surface 11. The supporting piece 50 is disposed between the rotating seat 30 and the positioning platform 10, so that the rotating seat 30 and the positioning platform 10 are arranged opposite each other along the direction X perpendicular to the support surface. In an embodiment where the adjustment assembly 23 includes the first connecting seat 231 and the second connecting seat 232, the first connecting seat 231 and the second connecting seat 232 are located between the positioning platform 10 and the rotating seat 30. There may be one or more supporting pieces 50. In an embodiment where a plurality of supporting pieces 50 are provided, the plurality of supporting pieces 50 are arranged at intervals to ensure uniform load distribution on the positioning platform 10, so that the supporting pieces 50 can support the positioning platform 10 more stably. For example, four supporting pieces 50 are provided, and the four supporting pieces 50 are located at the four corners of a rectangle respectively.

In some embodiments, the positioning apparatus 100 further includes a base 60, and the centering mechanism 40 is mounted on the base 60. The base 60 may be located on a side of the rotating seat 30 facing away from the positioning platform 10. In embodiments where the direction X perpendicular to the support surface is an up-down direction, the rotating seat 30 may be located above the base 60, and the positioning platform 10 may be located above the rotating seat 30. The base 60 facilitates the mounting of the centering mechanism 40.

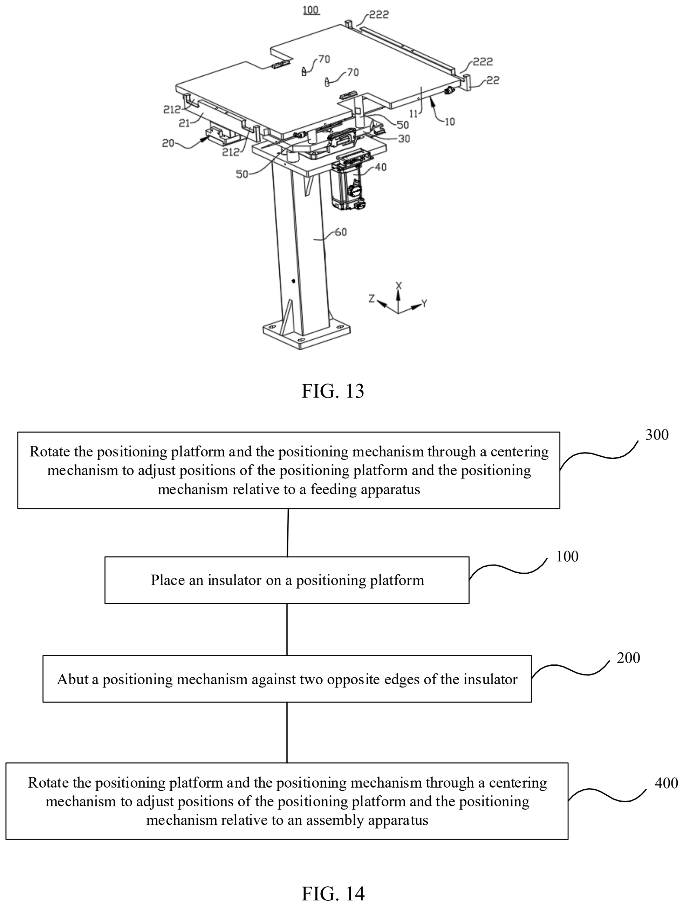

As shown in FIG. 13, in some embodiments, the positioning apparatus 100 further includes a positioning pin 70, the positioning pin 70 is disposed on the positioning platform 10, and the positioning pin 70 is configured to mesh with a positioning hole on the insulator 200.

The positioning pin 70 is disposed on the positioning platform 10 and protrudes from the support surface 11. The positioning pin 70 meshes with the positioning hole on the insulator 200, and specifically the positioning pin 70 is inserted into the positioning hole, and the insulator 200 is placed on the positioning platform 10. After the insulator 200 is placed on the positioning platform 10, the positioning mechanism 20 positions the two opposite edges of the insulator 200.

There may be one or more positioning pins 70. The positioning pins 70 and the positioning holes on the insulator 200 may be arranged on a one-to-one basis.

The positioning pin 70 can mesh with the positioning hole on the insulator 200 to position the insulator 200 on the positioning platform 10, improving the accuracy of placing the insulator 200 on the positioning platform 10. Through cooperation with the positioning mechanism 20, it can further improve the positioning accuracy of the insulator 200. This improves the relative positional relationship between the insulator 200 and other components in cooperation when the insulator 200 is transferred to a next station, helping improve the quality of connection between the other components and the insulator 200.

An embodiment of this application further provides a battery cell manufacturing device, including a clamping mechanism and the positioning apparatus 100 according to any one of the preceding embodiments. The clamping mechanism is disposed downstream of the positioning apparatus 100, and the clamping mechanism is configured to clamp the insulator 200 positioned by the positioning apparatus 100.

The clamping mechanism is disposed downstream of the positioning apparatus 100. The clamping mechanism clamps the insulator 200 positioned by the positioning mechanism 20 of the positioning apparatus 100 and moves it to the next station, where the insulator 200 wraps around the outer surface of the electrode assembly, and the insulator 200 is welded to the end cover assembly.

The positioning apparatus 100 positions the insulator 200 by abutting against two opposite edges of the insulator 200, improving the positioning accuracy. This improves the relative positional relationship between the insulator 200 and other components (for example, the end cover assembly) in cooperation when the clamping mechanism clamps the insulator 200 and transfers it to next stations, helping improve the quality of connection between the other components and the insulator 200.

As shown in FIG. 14, an embodiment of this application further provides an insulator 200 positioning method, and the insulator 200 positioning method includes the following steps.

S100. Place an insulator 200 on a positioning platform 10.

S200. Abut a positioning mechanism 20 against at least one edge of the insulator 200 to position the insulator 200.

The insulator 200 may be placed on the positioning platform 10 before abutting the positioning mechanism 20 against the at least one edge of the insulator 200 to position the insulator 200. In other words, S100 is performed before S200.

Alternatively, the position of the positioning mechanism 20 may be adjusted before placing the insulator 200 on the positioning platform 10 and adjusting the position of the insulator 200 until the positioning mechanism 20 abuts against the at least one edge of the insulator 200. For example, the insulator 200 is placed on the positioning platform 10, and the position of the insulator 200 is adjusted until the positioning mechanism 20 abuts against two opposite edges of the insulator 200 to position the insulator 200. In other words, S200 is performed before S100.

The insulator 200 is positioned by abutting the positioning mechanism 20 against at least one edge of the insulator 200, improving the positioning accuracy. This improves the relative positional relationship between the insulator 200 and other components in cooperation when the insulator 200 is transferred to a next station, helping improve the quality of connection between the other components and the insulator 200.

In some embodiments, before the placing an insulator 200 on a positioning platform 10, the insulator 200 positioning method further includes the following step.

S300. Rotate the positioning platform 10 and the positioning mechanism 20 through a centering mechanism 40 to adjust positions of the positioning platform 10 and the positioning mechanism 20 relative to a feeding apparatus, where the feeding apparatus is configured to provide the insulator 200.

The feeding apparatus is an apparatus for providing the insulator 200. In some embodiments, the feeding apparatus may include a feeding bin storing the insulator 200.

Due to an assembly error of the device, an error caused by frequent use of the device, or other reasons, the positioning platform 10 and the positioning mechanism 20 may be deflected by a certain angle relative to the feeding apparatus. This may lead to a large error in the process of placing the insulator 200 on the positioning platform 10. As a result, the insulator 200 cannot be placed on the positioning platform 10, or the insulator 200 can be placed on the positioning platform 10 but the positioning mechanism 20 cannot correct the error.

Therefore, before the insulator 200 is placed on the positioning platform 10, the positioning platform 10 and the positioning mechanism 20 are rotated through the centering mechanism 40 to adjust the positions of the positioning platform 10 and the positioning mechanism 20 relative to the feeding apparatus so that the insulator 200 provided by the feeding apparatus can be placed on the positioning platform 10 more accurately.

In some embodiments, the placing an insulator 200 on a positioning platform 10 includes:
placing, through a transfer mechanism, the insulator 200 provided by a feeding apparatus on the positioning platform 10.

The transfer mechanism may be a robotic arm, a conveyor belt, or the like.

The transfer mechanism is used to place the insulator 200 provided by the feeding apparatus on the positioning platform 10, which can reduce labor costs and improve the production efficiency.

In some embodiments, after the abutting the positioning mechanism 20 against at least one edge of the insulator 200, the insulator 200 positioning method further includes the following step.

S400. Rotate the positioning platform 10 and the positioning mechanism 20 through a centering mechanism 40 to adjust positions of the positioning platform 10 and the positioning mechanism 20 relative to an assembly apparatus, where the assembly apparatus is configured to assemble the insulator 200 on a workpiece.

The assembly apparatus is disposed downstream of the positioning apparatus 100, and provides a next station for the insulator 200. For example, during battery cell manufacturing, the assembly apparatus may be a station where the insulator 200 wraps around the outer surface of the electrode assembly, or a station where the insulator 200 is welded to the end cover assembly.

Due to an assembly error of the device, an error caused by frequent use of the device, or other reasons, the positioning platform 10 and the positioning mechanism 20 may be deflected by a certain angle relative to the assembly apparatus. This error may cause that the insulator 200 cannot be transferred to the assembly apparatus or a large error is found between the insulator 200 and the workpiece after the insulator 200 is transferred to the assembly apparatus.

Therefore, after the positioning mechanism 20 abuts against at least one edge of the insulator 200, the positioning platform 10 and the positioning mechanism 20 are rotated through the centering mechanism 40 to adjust the positions of the positioning platform 10 and the positioning mechanism 20 relative to the assembly apparatus. This improves the relative positional relationship between the insulator 200 and other components in cooperation when the insulator 200 is transferred to a next station, helping improve the quality of connection between the other components and the insulator 200.

In some embodiments, after the abutting the positioning mechanism 20 against at least one edge of the insulator 200, the insulator 200 positioning method further includes:
transferring, through a clamping mechanism, the insulator 200 on the positioning platform 10 to an assembly apparatus, where the assembly apparatus is configured to assemble the insulator 200 on a workpiece.

The clamping mechanism is used to transfer the insulator 200 on the positioning platform 10 to the assembly apparatus, which can reduce labor costs and improve the production efficiency.

An embodiment of this application provides a positioning apparatus 100. The positioning apparatus 100 includes a positioning platform 10, a positioning mechanism 20, a rotating seat 30, a centering mechanism 40, a base 60, and a positioning pin 70. The positioning pin 70 is disposed on the positioning platform 10 and protrudes from the support surface 11 of the positioning platform 10. The centering mechanism 40 is mounted on the base 60. The rotating seat 30 is connected to the centering mechanism 40, and the centering mechanism 40 is configured to drive the rotating seat 30 to rotate around an axis extending along the direction X perpendicular to the support surface. The positioning mechanism 20 and the positioning platform 10 are mounted on the rotating seat 30. The centering mechanism 40 drives the rotating seat 30 to rotate, thereby driving the positioning mechanism 20 and the positioning platform 10 to rotate around the axis extending along the direction X perpendicular to the support surface. The positioning platform 10 is connected to the rotating seat 30 through the supporting piece 50, and the supporting piece 50 allows the positioning platform 10 and the rotating seat 30 to be arranged opposite each other at intervals along the direction X perpendicular to the support surface.

The positioning mechanism 20 includes a first abutting portion 21, a second abutting portion 22, a first connecting seat 231, a second connecting seat 232, a driver 233, a first slide block 234, a second slide block 235, a first restraint member 236, and a second restraint member 237. The first abutting portion 21 and the second abutting portion 22 are located on opposite sides of the positioning platform 10 along the first direction Y. The first connecting seat 231 is connected to a first output end of the driver 233, the first abutting portion 21 is connected to the first connecting seat 231 through the first slide block 234, and the first slide block 234 is disposed adjustably along the first direction Y on the first connecting seat 231, so that the first abutting portion 21 can be disposed adjustably along the first direction Y relative to the first connecting seat 231. The second connecting seat 232 is connected to a second output end of the driver 233, the second abutting portion 22 is connected to the second connecting seat 232 through the second slide block 235, and the second slide block 235 is disposed adjustably along the first direction Y on the second connecting seat 232, so that the second abutting portion 22 can be disposed adjustably along the first direction Y relative to the second connecting seat 232. The first connecting seat 231, the second connecting seat 232, and the driver 233 are disposed between the positioning platform 10 and the rotating seat 30. The surface of the first abutting portion 21 facing the second abutting portion 22 is provided with the first restraint member 236, and the surface of the second abutting portion 22 facing the first abutting portion 21 is provided with the second restraint member 237.

The foregoing descriptions are merely preferred embodiments of this application, but are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A positioning apparatus for positioning an insulator, wherein the insulator is configured to wrap an outer surface of a workpiece, and the positioning apparatus comprises:
a positioning platform for supporting the insulator; and
a positioning mechanism configured to abut against at least one edge of the insulator to position the insulator.

2. The positioning apparatus according to claim 1, wherein the positioning mechanism is configured to abut against two opposite edges of the insulator to position the insulator.

3. The positioning apparatus according to claim 1, wherein the positioning mechanism comprises a first abutting portion, a second abutting portion, and an adjustment assembly, wherein the first abutting portion and the second abutting portion are arranged opposite each other along a first direction, the first abutting portion and the second abutting portion are configured to abut against two opposite edges of the insulator respectively, the first abutting portion and the second abutting portion are connected to the adjustment assembly, and the adjustment assembly is configured to adjust the distance between the first abutting portion and the second abutting portion.

4. The positioning apparatus according to claim 3, wherein the adjustment assembly comprises a first connecting seat, a second connecting seat, and a driver, wherein the first connecting seat connects the first abutting portion and the driver, the second connecting seat connects the second abutting portion and the driver, and the driver is configured to drive at least one of the first connecting seat and the second connecting seat to move along the first direction to adjust the distance between the first abutting portion and the second abutting portion.

5. The positioning apparatus according to claim 4, wherein the driver has a first output end and a second output end arranged opposite each other, wherein the first connecting seat is connected to the first output end, the second connecting seat is connected to the second output end, and the driver is configured to drive the first connecting seat and the second connecting seat to move in opposite directions.

6. The positioning apparatus according to claim 5, wherein the driver is a double-acting cylinder.

7. The positioning apparatus according to any one of claims 4 to 6, wherein the positioning platform has a support surface, and the support surface is configured to support the insulator; wherein the first connecting seat and the second connecting seat are both located on a side of the positioning platform facing away from the support surface.

8. The positioning apparatus according to any one of claims 4 to 6, wherein the first abutting portion is disposed adjustably along the first direction on the first connecting seat; and/or the second abutting portion is disposed adjustably along the first direction on the second connecting seat.

9. The positioning apparatus according to any one of claims 3 to 6, wherein the first abutting portion is provided with a first clearance notch for avoiding a clamping mechanism; and/or the second abutting portion is provided with a second clearance notch for avoiding the clamping mechanism, wherein the clamping mechanism is configured to clamp the insulator positioned on the positioning platform.

10. The positioning apparatus according to claim 9, wherein the first abutting portion is provided with a plurality of first clearance notches arranged at intervals; and/or the second abutting portion is provided with a plurality of second clearance notches arranged at intervals.

11. The positioning apparatus according to any one of claims 3 to 6, wherein along the first direction, a surface of the first abutting portion facing the second abutting portion is provided with a first restraint member, and the first restraint member is configured to restrict the edge of the insulator against the first abutting portion from moving in a direction away from the positioning platform; and/or along the first direction, a surface of the second abutting portion facing the first abutting portion is provided with a second restraint member, and the second restraint member is configured to restrict the edge of the insulator against the second abutting portion from moving in a direction away from the positioning platform.

12. The positioning apparatus according to any one of claims 1 to 6, wherein the positioning apparatus further comprises a rotating seat and a centering mechanism, wherein the positioning platform and the positioning mechanism are connected to the rotating seat, the rotating seat is connected to the centering mechanism, and the centering mechanism is configured to drive the rotating seat to rotate.

13. The positioning apparatus according to claim 12, wherein the rotation axis of the rotating seat is perpendicular to the support surface of the positioning platform, and the support surface is configured to support the insulator.

14. The positioning apparatus according to any one of claims 1 to 6, wherein the positioning apparatus further comprises a positioning pin, the positioning pin is disposed on the positioning platform, and the positioning pin is configured to mesh with a positioning hole on the insulator.

15. A battery cell manufacturing device, comprising:
the positioning apparatus according to any one of claims 1 to 14; and
a clamping mechanism disposed downstream of the positioning apparatus, wherein the clamping mechanism is configured to clamp the insulator positioned by the positioning apparatus.

16. An insulator positioning method, comprising:
placing an insulator on a positioning platform; and
abutting a positioning mechanism against at least one edge of the insulator to position the insulator.

17. The insulator positioning method according to claim 16, wherein before the placing an insulator on a positioning platform, the insulator positioning method further comprises:
rotating the positioning platform and the positioning mechanism through a centering mechanism to adjust positions of the positioning platform and the positioning mechanism relative to a feeding apparatus, wherein the feeding apparatus is configured to provide the insulator.

18. The insulator positioning method according to claim 16, wherein the placing an insulator on a positioning platform comprises:
placing, through a transfer mechanism, the insulator provided by a feeding apparatus on the positioning platform.

19. The insulator positioning method according to claim 16, wherein after the abutting a positioning mechanism against at least one edge of the insulator, the insulator positioning method further comprises:
rotating the positioning platform and the positioning mechanism through a centering mechanism to adjust positions of the positioning platform and the positioning mechanism relative to an assembly apparatus, wherein the assembly apparatus is configured to assemble the insulator on a workpiece.

20. The insulator positioning method according to claim 16, wherein after the abutting a positioning mechanism against at least one edge of the insulator, the insulator positioning method further comprises:
transferring, through a clamping mechanism, the insulator on the positioning platform to an assembly apparatus, wherein the assembly apparatus is configured to assemble the insulator on a workpiece.
